Europäisches Patentamt

European Patent Office

Office européen des brevets

(19)

(11) Publication number: 0 103 459
A2

(12) **EUROPEAN PATENT APPLICATION**

(21) Application number: 83305195.6

(22) Date of filing: 07.09.83

(51) Int. Cl.³: G 06 K 9/00

(30) Priority: 10.09.82 US 416787

(43) Date of publication of application: 21.03.84
Bulletin 84/12

(84) Designated Contracting States: DE FR GB IT SE

(71) Applicant: WESTINGHOUSE ELECTRIC
CORPORATION, Westinghouse Building Gateway
Center, Pittsburgh Pennsylvania 15235 (US)

(72) Inventor: Shum, Lanson Yatsang, 2500 Alydar Drive,
Wexford Pennsylvania (US)
Inventor: Sienkiewicz, Leon Jerome, 14 Arrowhead
Drive, Export Pennsylvania (US)
Inventor: Meier, Daniel Leo, 264 Barlay Avenue,
Pittsburgh Pennsylvania (US)

(74) Representative: van Berlyn, Ronald Gilbert, 23, Centre
Heights, London, NW3 6JG (GB)

(54) A multi-image object recognition system.

(57) Apparatus for optically recognizing the configuration of several differently configured workpieces simultaneously, uses an image comparison technique and a reference negative transparency containing a plurality of two-dimensional images of different workpieces to be recognized. The reference negative transparency comprises a multi-image transparency mask produced from photographic film. An array of light-responsive photocells develops output signals indicative of the degree of correspondence between the image of an object which is superimposed on the mask and each of the image transparencies of the mask. The output signals developed by each of the photocells is compared with stored information to identify the object being viewed.

ACTORUM AG

1

# A MULTI-IMAGE OBJECT RECOGNITION SYSTEM

This invention generally relates to optical apparatus for image recognition for recognizing a plurality of objects by workpieces which are being viewed simultaneously; more particularly, the invention pertains to such an apparatus which uses an optical image comparison technique

The continuing efforts to implement totally unattended process and assembly operations utilizing automatic machine tools and industrial robots has placed increasing demands on equipment associated with part feeders to identify the type, orientation and quality of workpieces or parts being presented to a process or an assembly operation. Failure to properly identify a part, or one that is damaged or improperly positioned, may interrupt the process or assembly operation and cause expensive downtime. The need to provide accurate identification of parts, their orientation and quality is presently being met through vision sytems typically utilizing a photodiode array camera and a digital computer. While this approach has proven to be generally successful, the cost and sophistication associated with it cannot be justified in many applications.

There is disclosed herein with reference to the accompanying drawings a novel object recognition system which employs an image comparison technique utilizing conventional photographic film for generating an image mask, or negative transparency. The image mask can be treated to remove irrelevant features of an object to be detected or emulsion can be removed to enhance the sensitivity of a particular feature of the object.

The invention in its broad form comprises an optical-type object recognition apparatus for simultaneously recognizing and identifying a plurality of workpieces, comprising a multi-image transparency mask means consisting of an array of two or more negative images each having a light transparent image corresponding to a two-dimensional view of a different object configuration; optical lens means associated with said multi-image transparency mask to superimpose a two-dimensional image of a workpiece object brought within the field of view of the optical lens means onto each said negative images; a light-responsive transducer means associated with each of said negative images to respond to a level of light transmitted through the transparent portion of said negative image when the image of the workpiece object within the field of view of the optical lens means is superimposed onto said negative transparency, each of said light-responsive transducer means generating an output signal indicative of a degree of correspondence between the workpiece object image and that of the transparent portion of the associated negative transparency, using transmitted light; and circuit means responding to said output signals by determining which negative transparency object configuration most closely matches the superimposed object image.

In a preferred embodiment described herein, discrete portions of a photographic film are exposed to each of the various parts, or objects, likely to be brought into view of an object recognition system by a parts feeder associated with an industrial assembly or process operation. The photographic film is then processed thereby producing a plurality of discrete image transparencies. The processed film forms a multi-image mask which is positioned in combination with a lens system in an object recognition apparatus such that the object image of a part brought into the field of view of the optical recognition apparatus is focused on each of the image transparencies of the multi-image mask.  A light-responsive device, i.e., a photocell, associated with each of the image transparencies generates an output signal indicative of the level of light transmitted by the image transparency when the object image is superimposed on the image transparancy by the lens system.  An image transparency corresponding identically to a superimposed object image will transmit negligible light, thus the output signal of the corresponding photocell functions to identify the image transparency of the multi-image mask which matches the object, or part, presently being viewed by the object recognition apparatus. The plurality of photocells may typically be implemented through the use of an x-y photocell array, such as an 8 x 8 array, wherein the individual cells are sequentially scanned through the use of an appropriate electronic ciruit.

The invention will become more readily apparent than the following exemplary description to be read in conjunction with the accompanying drawings:

Figure 1 is a schematic illustration of an application of an embodiment of the invention;

Fig.2 is an exploded view of the optical parts recognition apparatus of Fig.1 comprising the present invention;

Fig.3 is a sectioned illustration of an alternative embodiment of the multi-image transparency mask of Fig. 2; and

Fig.4 is a diagrammatic illustration of a photocell array and scanning electronic elements which can be used in the invention.

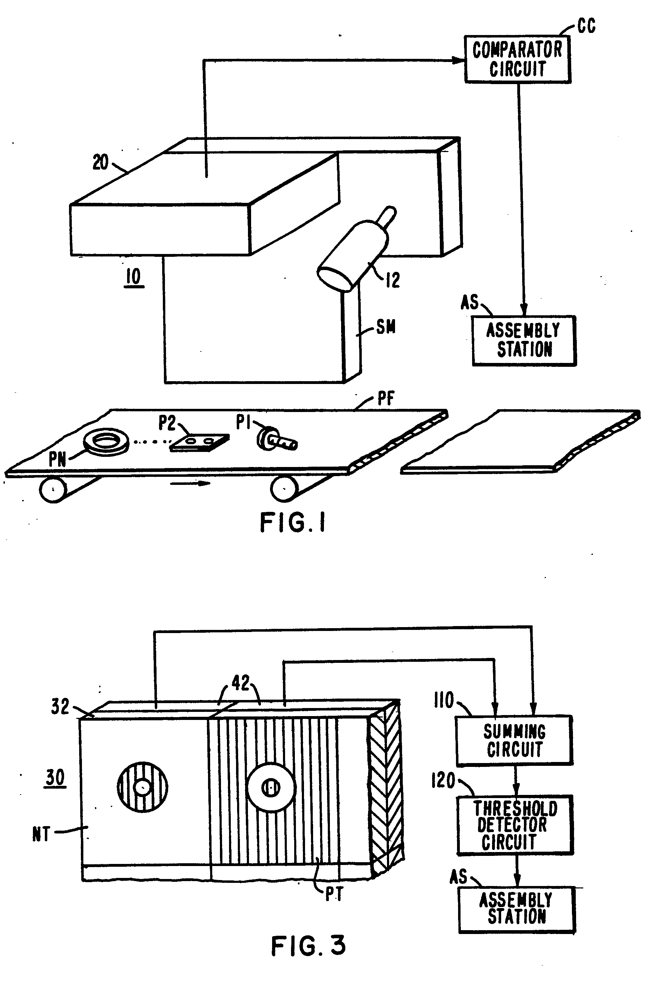

Referring to Fig.1 there is illustrated a multi-image recognition system 10 comprising a light source 12 and an object recognition apparatus 20 secured relative to a parts feeder, or parts conveyor mechanism, PF by a support member SM. The object image of the part P1, P2, ... PN brought within the field of view of the

0103459

optical recognition apparatus 20 by the parts feeder PF, and illuminated by the light source 12, is simultaneously superimposed upon each of a plurality of object image mask transparencies. The degree to which the superimposed object image corresponds to the object image mask transparencies is determined on the basis of the light transmitted through the respective image mask transparencies as read by light-responsive photocells associated with each of the image mask transparencies. The signals developed by the photocells, which is indicative of the transmitted light level, are compared to predetermined threshold levels by a comparator circuit CC. When the output signal of a light-responsive photocell indicates a match between the object image and an image mask transparency, the comparator circuit CC develops an output signal identifying the type of object within the field of view of the object recognition apparatus 20. This output signal is then available for display or control purposes and may be transmitted to a process or assembly station AS to alert the assembly station as to the type of object to be next supplied by the parts feeder PF.

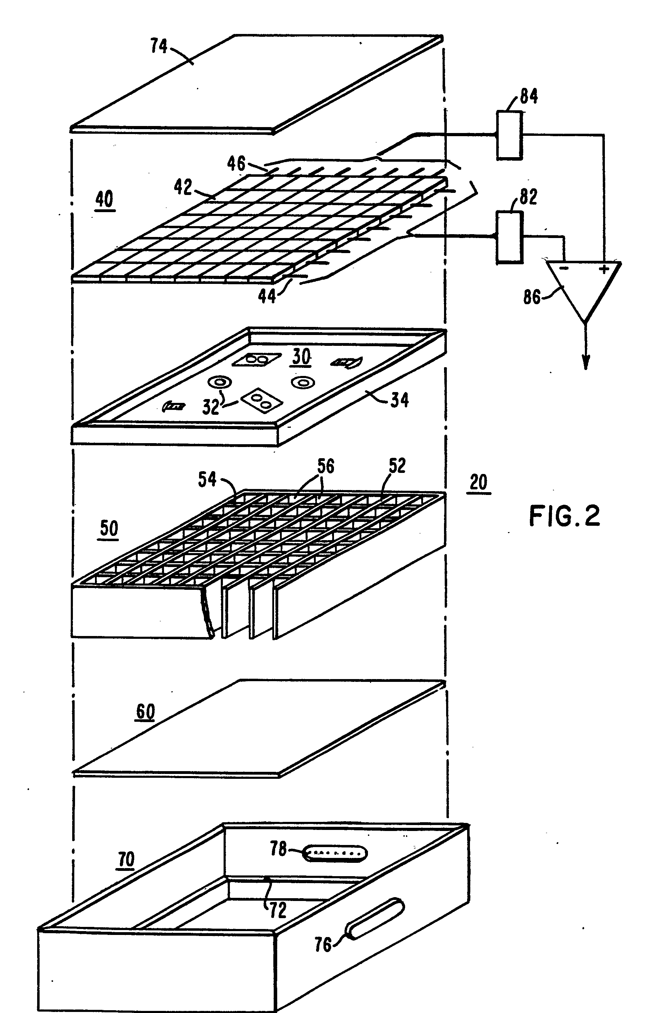

A typical implementation of the object recognition apparatus 20 is illustrated in Fig. 2. A multi-image transparency mask 30 comprising a plurality of object image transparencies 32 is secured to a film holder 34 which in turn accommodates the positioning of a two-dimensional array of light-responsive devices 40 such that each photoresponsive device 42 is aligned adjacent to an object image transparency 32. The combination of the multi-image transparency mask 30 and the two-dimensional array of light-responsive devices 40 is secured to a partitioned member 50 having dividers 52 and 54 creating a "honeycomb" configuration to form a plurality of isolated tubular passages 56 wherein each individual passage 56 aligns with one of the object image transparencies 32. A molded acrylic lens member 60 is secured to the opposite side of the partitioned member 50. The assembled combination of the multi-image transparency mask 30, light detecting array 40, partitioned member 50 and lens member 60 is positioned within the housing 70 and maintained in a secured position against the shoulder member 72 by the backplate 74. The electrical connectors 76 and 78 transmit the electrical signals from the leads 44 and 46 associated with the two-dimensional array of light-responsive devices 40 to an X-address multiplexer circuit 82 and a Y-address multiplexer circuit 84 respectively.

The lens member 60 focuses an image of the object present within the field of view of the object recognition apparatus 20 through the respective passages 56 of the partitioned member 50 onto each of the object image transparencies 32 of the multi-image transparency mask 30. The partitions 52 and 54 of the partitioned member 50 assure optical isolation among the object images superimposed upon the various object image mask transparencies 32 by the lens member 60. While the lens member 60 is shown to be a single integral molded acrylic lens member, it is obvious that individual lens members could be positioned within each of the passages 56.

The multi-element light-responsive array 40 may typically consist of an x-y photocell array (8 x 8) arranged to be sequentially scanned by the analog multiplexers 82 and 84. The photocell array 40 may be fabricated either as a single substrate or combination of a single strip of 1xn photocells. In order to facilitate electronic scanning of the light value signal developed in response to the level of light transmitted by the corresponding object image transparency 32 one side of each photocell element 42 is connected horizontally forming the X-lines 44 and the opposite side of the photocells 42 are connected vertically forming the Y-lines 46. The entire two-dimensional array 46 is then scanned using the X-addressed analog multiplexer circuit 82 and the Y-addressed analog multiplexer circuit 84. The differential voltage across the respective light-responsive elements 42 is amplified by the differential amplifier 86.

This simple technique of employing conventional photographic film transparencies to evaluate object images superimposed upon the object image transparencies by a lens device provides a simple and cost effective optical parts recognition system. Further sensitivity can be achieved by color enhancement and filtering techniques.

The multi-image transparency mask 30 is produced by conventional film processing after the photographic film secured to the film holder 34 is sequentially exposed to different object images transmitted through the passages 56 of the partitioned member 50 by a lens member 60. An electronic shutter mechanism is aligned with a portion of the lens member 60 associated with one of the passages 56 with remaining passages being covered to avoid film exposure. One of the objects of interest is then positioned within the field of view of the apparatus 20 and the shutter mechanism "takes a picture" of the object by exposing the portion of the photographic film secured to the film holder 34 to an image of the object. This process is repeated for each of the passages 56 to expose corresponding portions of the photographic film, each to a different object image. After this picture taking process is completed, the photographic film positioned within the film holder 34 is processed to produce the negative transparencies corresponding to the object image transparencies 32 wherein each negative transparency has a light transparent portion of a different object configuration.

In the above-described embodiment, wherein the multi-image transparency mask 30 consists of a negative photographic transparency, the response of the object recognition apparatus 20 to an object within its field of view is analogous to the operation of a low pass filter.

In this embodiment the object image transparency 32 transmitting the least amount of light in response to the superimposed object image is identified through the operation of a signal threshold detector circuit 90 associated with the output of the amplifier circuit 86 to identify the viewed object as being of the type represented by that particular object image transparency. In the event the image of an object is such as to produce a minimum light transmission level by two or more object image transparencies 32 the low pass filter implementation described above would be inadequate to assure valid object recognition.

This limitation can be overcome by developing a multi-image transparency mask which represents a combination of a "low pass" and a "high pass" transparency for each object to be recognized and in so doing effectively produce a band pass arrangement. The high pass transparency corresponds to a positive film transparency of the multi-image mask. The positive transparency is produced by making a positive contact print from the negative film transparency previously identified as the multi-image transparency mask 30. Each positive transparency has an opaque, or non-light transparent portion, corresponding to the object configuration of the negative transparency from which it is made.

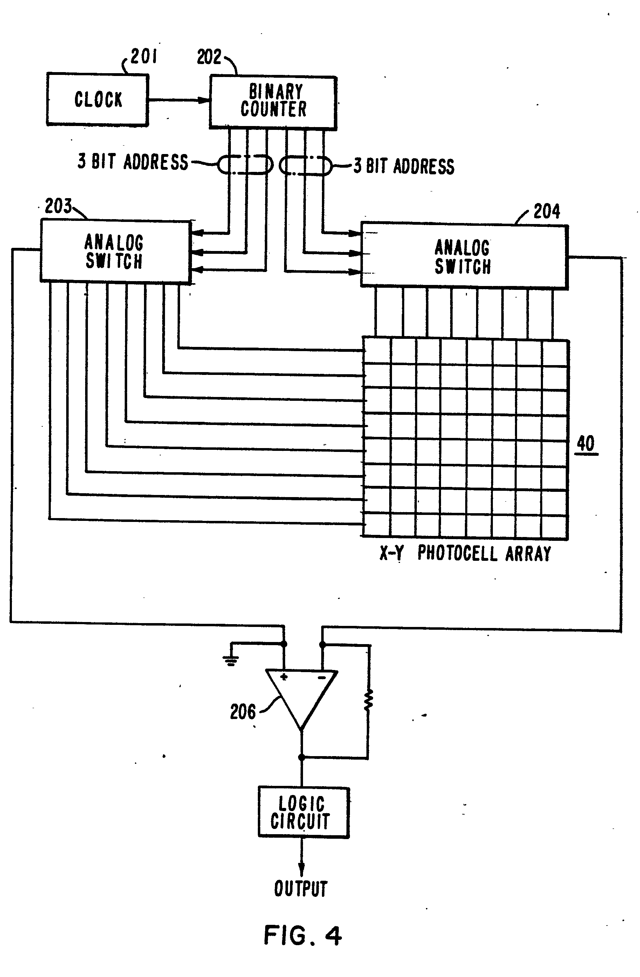

A combination multi-image transparency mask is then fabricated from the negative and positive transparencies to produce a combination transparency mask as shown in Fig. 3 wherein both a negative object image transparency NT and a positive object image transparency PT of each object to be recognized are included to form the "bandpass" multi-image transparency mask 100. The number of recognizable objects associated with the mask 100 are reduced by factor of two from the number of objects capable of being recognized by the mask 30 inasmuch as two passages 56 and two light-responsive devices 42, one for the positive transparency and one for the negative transparency, are required to provide a valid recognition of an object brought within the field of view of the object recognition apparatus 20.

The combination of a negative film transparency and a positive film transparency for each recognizable object significantly increases the object recognition reliability. The presence of an object which is significantly larger in area than the object from which the image transparencies were developed, when superimposed upon the negative transparency, will produce a minimum transmission of light through the negative transparency resulting in an erroneous object recognition output signal from the corresponding light-responsive device. The same large object, however, will project a correspondingly large image which, when superimposed upon the positive transparency, will cause less than a maximum amount of light to be transmitted through the positive transparency thus resulting in an output signal from the corresponding light-responsive device indicative of the presence of an object other than that from which the positive transparency was developed. The reverse set of responses will occur when an object smaller than the object from which the negative and positive transparencies were developed is positioned within the field of view of the object recognition device 20.

The benefits of a multi-image transparency mask employing both a negative and positive transparency for each recognizable object, can be realized, as schematically shown in Fig. 3, through the use of a summing circuit 110 which combines the output signals developed by the light-responsive devices 42 associated with the positive and negative transparencies of a given object image. A threshold detector circuit 120 responds to an input signal from the summing circuit 110 which corresponds to an object configuration which results in a minimum light transmission through the negative transparency and a maximum light transmission through the positive transparency by developing an output display, or control signal, identifying the type of object present within the field of view of object recognition apparatus 20.

A typical implementation of the scanning electronics associated with the photocell array is shown in Fig. 4. A clock source 201 generates scanning rate pulses which are divided by a binary counter 202 to generate two address sets, one for the X-row of the photocells and another for the Y-column of the photocells. A first analog multiplexer 203 consecutively turns on the rows, while a second analog multiplexer 204 consecutively turns on the columns. Accordingly, each photocell is sequentially connected to the amplifier 206. The amplifier 206 amplifies the photocell signal to be analyzed by a logic circuit 207 which is typically a microcomputer. The logic computer 207 includes a memory element which stores the scaling values and thresholds of each photocell to be compared with each object image. Object recognition occurs when a maximum recognition value is realized in accordance with the following relationships:

Recognition Value =
$$(K_{positive} \times V_{positive}) - (K_{negative} \times V_{negative})$$

Recognition occurs when the recognition value minus the threshold values is a positive condition. where:

$K_{positive}$ is the scaling factor of the positive mask photocell

$V_{positive}$ is the voltage output of the positive mask photocell

$K_{negative}$ is the scaling factor of the negative mask photocell

$V_{negative}$ is the voltage output of the negative mask photocell

10

CLAIMS:

1. An optical-type object recognition apparatus for simultaneously recognizing and identifying a plurality of workpieces, comprising:

a multi-image transparency mask means consisting of an array of two or more negative images each having a light transparent image corresponding to a two-dimensional view of a different object configuration;

optical lens means associated with said multi-image transparency mask to superimpose a two-dimensional image of a workpiece object brought within the field of view of the optical lens means onto each said negative images;

a light-responsive transducer means associated with each of said negative images to respond to a level of light transmitted through the transparent portion of said negative image when the image of the workpiece object within the field of view of the optical lens means is superimposed onto said negative transparency, each of said light-responsive transducer means generating an output signal indicative of a degree of correspondence between the workpiece object image and that of the transparent portion of the associated negative transparency, using transmitted light; and

circuit means responding to said output signals by determining which negative transparency object configuration most closely matches the superimposed object image.

2. Apparatus as claimed in claim 1 wherein said multi-image transparency mask is processed from photographic film, wherein portions of the film corresponding to said negative transparencies have been sequentially exposed to different object configurations.

3. Apparatus as claimed in claim 1 further including an object feeder means for positioning said object within the field of view of said optical lens means.

4. Apparatus as claimed in claim 1 wherein said array of negative transparencies consists of an X-Y array of photocells, each photocell responsive to the light transmitted by a negative transparency, and said circuit means including means for sequentially scanning said photocells and comparing the output signals with stored object information to determine which negative transparency most closely matches the object image superimposed by said optical lens means.

5. An object recognition apparatus as in claim 1, further comprising:

a second multi-image transparency mask means consisting of an array of two or more positive transparencies each having an opaque portion which is identical to the object configuration of a corresponding negative transparency of the first multi-image mask transparency;

optical lens means associated with said second image mask means to superimpose the image of an object brought within the field of view of the optical lens means onto said first and second image mask means;

a second light-responsive transducer means associated with each of the corresponding positive transparencies to respond to the light transmitted through the positive transparency when the image of said object is superimposed onto the corresponding positive transparency by generating a second output signal indicative of the level of transmitted light; and

12

0103459

said circuit means responding to both said first and second output signals corresponding to each set of positive and negative transparencies to determine which object configuration most closely matches the object image superimposed by said optical lens means.

6. Apparatus as claimed in claim 5 wherein said negative transparency is processed from photographic film exposed to an object, and the corresponding positive transparency consists of a contact print made from said negative transparency.

7. Apparatus as claimed in claim 5 further including means for isolating the object images superimposed on each of said transparencies from each other.

FIG.1

FIG.3

74

84

46

40

42

82

44

86

30

32

34

56  52

54

50

20

52

FIG.2

60

70

78

72

76

FIG. 4